# FASCICULE DE BREVET EUROPEEN

(11) **EP 1 712 264 B1**
(45) Date de publication et mention de la délivrance du brevet: **21.11.2007**
(21) Numéro de dépôt: 06300221.6
(22) Date de dépôt: 10.03.2006
(51) Int. Cl.: B01D 17/02, C09K 3/32, E02B 3/10, E02B 15/04

(54) **Elément en forme de boudin pour absorber des liquides**
Wulstförmiges, flüssigkeitsabsorbierendes Element
Liquid absorbing element having a bulged shape

(30) Priorité: 12.04.2005 FR 0503639
(43) Date de publication de la demande: 18.10.2006
(73) Titulaire: SCHOELLER INDUSTRIES (Société par Actions Simplifiée), 67130 Wisches (FR)
(72) Inventeur: Brink, Jean, 67000 Strasbourg (FR); Dellenbach, Jean-Marc, 67280 Niederhaslach (FR); Kempf, Réjane, 67150 Erstein (FR)
(74) Mandataire: Nuss, Pierre

(56) Documents cités:
- EP-A- 0 578 147
- DE-U1- 29 904 116
- US-A- 4 792 399
- US-A- 4 861 475
- US-A- 5 743 674

## Description

La présente invention concerne les produits et articles à faculté d'absorption de liquides, de manière sélective ou non, en particulier les produits et articles en matériaux textiles ou nontissés adaptés pour contenir et/ou combattre les épanchements ou fuites de liquides polluants, tels que notamment les huiles, hydrocarbures, produits chimiques et liquides industriels.

La présente invention a plus particulièrement pour objet un élément absorbant allongé, sensiblement en forme de boudin, selon le préambule de la revendication 1.

Ce genre d'élément peut être utilisé soit pour contenir un épanchement (par exemple une flaque d'huile au pied d'une machine), pour former barrage à la progression ou à l'épanchement d'un liquide ou encore pour absorber un liquide répandu.

Ce type de boudin absorbant est généralement constitué, d'une part, par une enveloppe tubulaire perméable au(x) liquide(s) à absorber, délimitant un volume intérieur allongé et fermée à ses deux extrémités et, d'autre part, par un matériau de remplissage apte à absorber et à retenir le(s) liquide(s) à absorber, ledit matériau de remplissage présentant une densité faible; voir par exemple US 4792399, US 5743674 ou EP 0578147.

A l'usage, il s'avère que ce type d'élément absorbant présente deux inconvénients importants liés à sa structure.

En effet, du fait de sa forme à section ronde (déterminée par l'enveloppe tubulaire) et de la faible masse du matériau de remplissage, le boudin n'est en contact avec le sol que sur une faible surface. Il en résulte donc une interface d'absorption de faible dimension.

De plus, sa forme ronde ne permet pas audit boudin de résister aux éventuels mouvements de flux du liquide concerné, qui peuvent ainsi aisément le repousser.

Par le document US-A-5 743 674, on connaît un élément absorbant présentant sensiblement l'ensemble des caractéristiques du préambule de la revendication 1.

Le problème posé à la présente invention consiste à améliorer de manière notable la stabilité de l'élément absorbant au contact avec la surface présentant le liquide à absorber ou sur laquelle il doit former barrage.

Ce problème est résolu grâce aux caractéristiques de la partie caractérisante de la revendication 1.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un élément absorbant selon l'invention ;
la figure 2 est une vue en coupe transversale de l'élément de la figure 1, et
la figure 3 est une vue en coupe transversale d'une variante de réalisation de l'élément absorbant selon l'invention.

Les figures des dessins annexés montrent un élément absorbant 1, sensiblement en forme de boudin, constitué, d'une part, par une enveloppe tubulaire 2 perméable au(x) liquide(s) à absorber, délimitant un volume intérieur allongé et fermée à ses deux extrémités et, d'autre part, par un matériau de remplissage 3 apte à absorber et à retenir le(s) liquide(s) à absorber, ledit matériau de remplissage 3 présentant une densité faible (à l'état sec).

L'enveloppe tubulaire 2 est composée d'au moins deux parties allongées 4, 4' présentant des degrés de flexibilité ou de souplesse différents et assemblées entre elles le long de lignes d'assemblage 5 longitudinales, la ou les partie(s) allongée(s) 4 en forme de bande(s) de moindre flexibilité ou souplesse formant face(s) de contact privilégiée(s), en faisant préférentiellement état d'une propension à présenter une structure sensiblement plane, lorsque ledit élément 1 est mis en place sur la surface présentant le liquide à absorber ou sur laquelle il doit former barrage.

La ou les parties allongées 4 fournissent ainsi une ou des surfaces de contact et donc d'absorption de grande dimension, a priori planes(s), ainsi qu'un appui réparti permettant au boudin 1 de résister au roulement sur lui-même.

La fermeture de l'enveloppe tubulaire 2 à ses deux extrémités pourra être assurée par des agrafes 6, des bagues ou analogues.

Selon une première caractéristique avantageuse de l'invention, les parties allongées 4 et 4' formant l'enveloppe tubulaire 2 consistent en des nontissés, préférentiellement des nontissés de filaments de polypropylène, leurs lignes d'assemblage mutuel 5 consistant en des lignes de couture ou de soudure thermique.

Préférentiellement, lesdites parties allongées 4 et 4' sont formées du même matériau nontissé, la ou les partie(s) allongée(s) 4 de moindre flexibilité/souplesse étant constituée(s) d'une double épaisseur dudit matériau et la ou les partie(s) allongée(s) 4' de plus grande flexibilité/souplesse étant constituée(s) d'une épaisseur simple dudit matériau.

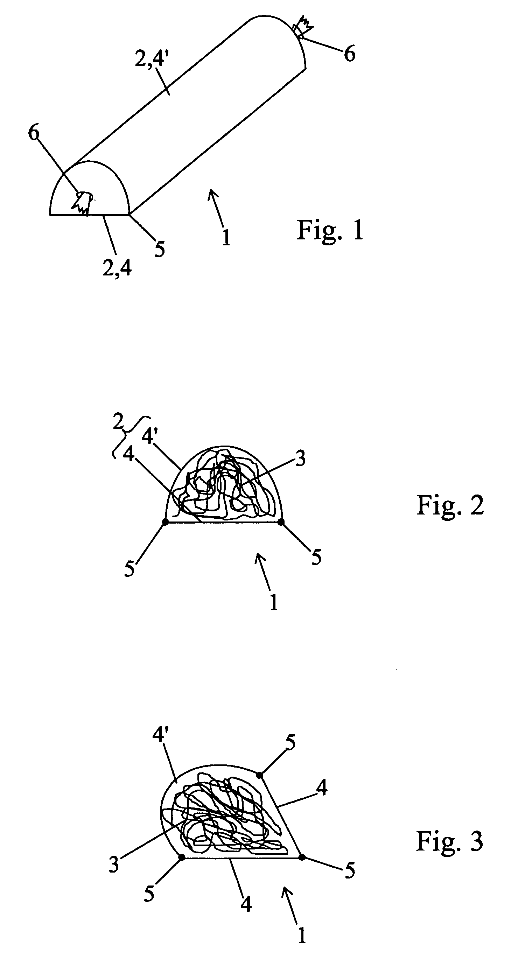

Bien entendu, l'élément absorbant 1 peut présenter, comme le montre par exemple la figure 3, plusieurs (au moins deux) parties allongées 4 et/ou plusieurs (au moins deux) parties allongées 4'.

Toutefois, de manière préférée, l'élément absorbant en forme de boudin comprend une unique partie allongée 4' en forme de bande de plus grande flexibilité/souplesse et une unique partie allongée 4 en forme de bande de moindre flexibilité/souplesse, la bande 4' présentant préférentiellement une largeur au moins double de celle de la bande 4.

En outre, la différence de flexibilité entre les deux parties allongées en forme de bande 4 et 4' est avantageusement suffisante pour que, en l'absence de contrainte, la partie allongée 4 de moindre souplesse/flexibilité présente une structure sensiblement plane et la partie allongée 4' de plus grande souplesse/ flexibilité présente une structure bombée (figures 1 et 2).

Conformément à une variante de réalisation avantageuse de l'invention, le matériau de remplissage 3 est formé de fibres nontissées en une matière polymère, préférentiellement sous forme de morceaux, de lanières, de bandelettes ou portions analogues de faible taille de nappe ou de voile de matériau polymère nontissé, par exemple sous forme de chutes ou de déchets de fabrication déchiqueté(e)s et/ou broyé(e)s.

Dans le cadre d'applications dans un contexte de pollutions ciblées, il peut être prévu que les fibres du matériau de remplissage 3 consistent en ou sont revêtues d'une matière hydrophobe et apte à retenir les hydrocarbures, par exemple du polypropylène, permettant de réaliser une absorption sélective ou un filtrage.

Afin d'augmenter la résistance du boudin 1 aux sollicitations ou poussées latérales, et d'assurer son maintien en place, la ou au moins l'une des partie(s) allongée(s) 4 de moindre flexibilité/souplesse peut présenter sur sa face externe un revêtement présentant des propriétés d'adhésion par pression.

En variante, ou en plus de la disposition précitée, il peut aussi être prévu de lester ledit boudin 1 au niveau de sa ou d'au moins une de ses partie(s) allongée(s) 4 de moindre flexibilité/souplesse.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention telle que décrite dans les revendications.

## Revendications

1. Elément absorbant (1), sensiblement en forme de boudin, constitué, d'une part, par une enveloppe tubulaire (2) perméable au(x) liquide(s) à absorber, délimitant un volume intérieur allongé et fermée à ses deux extrémités et, d'autre part, par un matériau de remplissage (3) apte à absorber et à retenir le(s) liquide(s) à absorber, ledit matériau de remplissage (3) présentant une densité faible, et l'enveloppe tubulaire (2) étant composée d'au moins deux parties allongées (4, 4') assemblées entre elles le long de lignes d'assemblage (5) longitudinales, la ou les partie(s) allongée(s) (4) formant face(s) de contact privilégiée(s), ayant une forme de bande(s) et faisant préférentiellement état d'une propension à présenter une structure sensiblement plane, lorsque ledit élément (1) est mis en place sur la surface présentant le liquide à absorber ou sur laquelle il doit former barrage,
l'élément (1) étant **caractérisé en ce que** les au moins deux parties allongées (4, 4') présentent des degrés de flexibilité ou de souplesse différents et **en ce que** la ou les partie(s) allongée(s) (4) en forme de bande(s) formant la face(s) de contact privilégiée présent(ent) une moindre flexibilité ou souplesse.

2. Elément absorbant selon la revendication 1, **caractérisé en ce que** les parties allongées (4 et 4') formant l'enveloppe tubulaire (2) consistent en des nontissés, préférentiellement des nontissés de filaments de polypropylène, leurs lignes d'assemblage mutuel (5) consistant en des lignes de couture ou de soudure thermique.

3. Elément absorbant selon la revendication 2, **caractérisé en ce que** les différentes parties allongées (4 et 4') sont formées du même matériau nontissé, la ou les partie(s) allongée(s) (4) de moindre flexibilité/souplesse étant constituée(s) d'une double épaisseur dudit matériau et la ou les partie(s) allongée(s) (4') de plus grande flexibilité/souplesse étant constituée(s) d'une épaisseur simple dudit matériau.

4. Elément absorbant selon l'une quelconque des revendications 1 à 3, **caractérisé en ce qu'**il comprend une unique partie allongée (4') en forme de bande de plus grande flexibilité/souplesse et une unique partie allongée (4) en forme de bande de moindre flexibilité/souplesse, la bande (4') présentant préférentiellement une largeur au moins double de celle de la bande (4).

5. Elément absorbant selon la revendication 4, **caractérisé en ce que** la différence de flexibilité entre les deux parties allongées en forme de bande (4 et 4') est suffisante pour que, en l'absence de contrainte, la partie allongée (4) de moindre souplesse/flexibilité présente une structure sensiblement plane et la partie allongée (4') de plus grande souplesse/flexibilité présente une structure bombée.

6. Elément absorbant selon l'une quelconque des revendications 1 à 5, **caractérisé en ce que** le matériau de remplissage (3) est formé de fibres nontissées en une matière polymère.

7. Elément absorbant selon l'une quelconque des revendications 1 à 6, **caractérisé en ce que** le matériau de remplissage (3) est formé de morceaux, de lanières, de bandelettes ou portions analogues de faible taille de nappe ou de voile de matériau polymère nontissé, par exemple sous forme de chutes ou de déchets de fabrication déchiqueté(e)s et/ou broyé(e)s.

8. Elément absorbant selon l'une quelconque des revendications 6 et 7, **caractérisé en ce que** les fibres du matériau de remplissage (3) consistent en ou sont revêtues d'une matière hydrophobe et apte à retenir les hydrocarbures, par exemple du polypropylène, permettant de réaliser une absorption sélective ou un filtrage.

9. Elément absorbant selon l'une quelconque des revendications 1 à 8, **caractérisé en ce que** la ou au moins l'une des partie(s) allongée(s) (4) de moindre flexibilité/souplesse présente sur sa face externe un revêtement présentant des propriétés d'adhésion par pression.

10. Elément absorbant selon l'une quelconque des revendications 1 à 9, **caractérisé en ce qu'**il est lesté au niveau de sa ou d'au moins une de ses partie(s) allongée(s) (4) de moindre flexibilité/souplesse.

## Claims

1. Absorbent element (1), effectively in the shape of a roll, comprising, for the first part, a tubular-shaped container (2), which is permeable in respect of the liquid/s to be absorbed, delimiting an extended interior volume and closed at both ends, and for the second part, a filler material (3), which is able to absorb and to retain the liquid/s to be absorbed, the said filler material being of a low density and the tubular container (2) comprising at least two elongated parts (4, 4'), assembled between them along longitudinal assembly lines (5), the elongated part/s (4) constituting preferred contact surface/s being shaped in the form of a plate/s or strip/s and preferably showing or having a propensity to present more or less a flat structure, when the said element (1) is placed on the surface on which is located the liquid to be absorbed or on which it is to form a barrier,
the element (1) being **characterised in that** the parts, or at least the two extended parts (4, 4'), have differing degrees of flexibility or suppleness and also **in that** the elongated part or parts (4), in the shape of a plate/s or strip/s forming the preferred contact surfaces have a lesser degree of flexibility or suppleness.

2. Absorbent element in accordance with Claim 1 above, **characterised in that** the elongated parts (4 and 4') forming the tubular container (2) consist of non-woven textiles, preferably non-woven polypropylene strands, the mutual assembly lines (5) of thermal seams or welds.

3. Absorbent element in accordance with Claim 2 above, **characterised in that** the different elongated parts (4 and 4') are formed from the same non-woven fabric, the elongated part or parts (4) having the lower degree of flexibility or suppleness being formed from a double thickness of the said material and the elongated part or parts (4') with the higher degree of flexibility or suppleness being formed from a single layer of the said material.

4. Absorbent element in accordance with any of the above claims, **characterised in that** it comprises a single elongated part (4') in the form of a strip having a higher degree of flexibility or suppleness and a single elongated part (4) in the form of a strip having a lower degree of flexibility or suppleness, the plate (4') having preferably a width of at least double the width of the plate (4).

5. Absorbent element in accordance with Claim 4 above, **characterised in that** the difference in flexibility between the two elongated parts in the form of a strip (4 and 4') is sufficient to ensure that, in the absence of any stresses, the elongated part (4) having the lower degree of flexibility or suppleness is of an effectively flat structure and the elongated part (4') having the greater degree of flexibility or suppleness has an arched structure.

6. Absorbent element in accordance with any of the above Claims 1 to 5, **characterised in that** the filler material (3) is formed from non-woven fibres in a polymer material.

7. Absorbent element in accordance with any of the above Claims 1 to 6, **characterised in that** the filler material (3) is formed from pieces, strips, bands or similar small pieces of cloth or fabric in a non-woven polymer material, for example, in the form of cut and/or crushed manufacturing cut-offs or scraps.

8. Absorbent element in accordance with either Claim 6 or 7 above, **characterised in that** the fibres of the filler material (3) consist of or are coated with a water-repellent material and are able to retain hydrocarbons, for example of the polypropylene type, thereby allowing selective absorption or filtering.

9. Absorbent element in accordance with any of Claims 1 to 8 above, **characterised in that** the, or one of the elongated parts (4) having a lower degree of flexibility or suppleness has, on its outer surface, a coating with pressure adhesion properties.

10. Absorbent element in accordance with any of Claims 1 to 9 above, **characterised in that** it is weighted at a level of its, or one of its elongated part/s (4) having a lower degree of flexibility or suppleness.

## Patentansprüche

1. Absorbierendes Element (1), welches im Wesentlichen wulstförmig ausgebildet ist und welches einerseits eine rohrförmige Hülle (2), die für die zu absorbierende(n) Flüssigkeit(en) durchlässig ist, die ein inneres längliches Volumen begrenzt, und an ihren beiden Enden geschlossen ist, und andererseits ein Füllmaterial (3) umfasst, das in der Lage ist, die zu absorbierenden Flüssigkeit(en) zu absorbieren und zurückzuhalten, wobei das Füllmaterial (3) eine niedrige Dichte aufweist und sich die rohrförmige Hülle (2) aus mindestens zwei länglichen Teilen (4, 4') zusammensetzt, die der Länge nach längs Verbindungslinien (5) miteinander verbunden sind, wobei der oder die länglichen Teil(e) (4), die bevorzugte(n) Kontaktfläche(n) bildet (bilden), und die die Form eines Bands (von Bändern) haben und vorzugsweise eine im Wesentlichen ebene Struktur aufweisen, wenn das Element (1) auf der Oberfläche angeordnet ist, die die zu absorbierende Flüssigkeit aufweist oder auf der es eine Sperre bilden muss, wobei das Element (1) **dadurch gekennzeichnet ist, dass** die mindestens zwei länglichen Teile (4, 4'), unterschiedliche Grade an Flexibilität oder Biegsamkeit aufweisen, und **dadurch**, dass der oder die länglichen Teil(e) (4) in Form von Band (Bändern), die die bevorzugte(n) Kontaktfläche(n) bilden, eine geringere Flexibilität oder Biegsamkeit aufweist (aufweisen).

2. Absorbierendes Element nach Anspruch 1, **dadurch gekennzeichnet, dass** die länglichen Teile (4 und 4'), die die rohrförmige Hülle (2) bilden, aus Vlies, vorzugsweise aus Vlies aus Polypropylenfasern bestehen, wobei deren gegenseitige Verbindungslinien (5) von Naht- oder Wärmeschweißlinien gebildet werden.

3. Adsorbierendes Element nach Anspruch 2, **dadurch gekennzeichnet, dass** die unterschiedlichen länglichen Teile (4 und 4') aus dem gleichen Vliesmaterial gebildet sind, wobei der oder die länglichen Teil(e) (4) mit der geringsten Flexibilität/Biegsamkeit aus einer doppelten Dicke dieses Materials bestehen und der oder die länglichen Teil(e) (4') mit größerer Flexibilität/Biegsamkeit aus einer einfachen Dicke dieses Materials besteht (bestehen).

4. Absorbierendes Element nach einem der Ansprüche 1 bis 3, **dadurch gekennzeichnet, dass** es einen einzigen länglichen Teil (4') in Form eines Bands (von Bändern) mit größerer Flexibilität/Biegsamkeit, und einen einzigen länglichen Teil (4) in Form eines Bands mit geringerer Flexibilität/Biegsamkeit umfasst, wobei das Band (4') im Wesentlichen eine mindestens doppelte Breite der Breite des Bandes (4) aufweist.

5. Absorbierendes Element nach Anspruch 4, **dadurch gekennzeichnet, dass** der Flexibilitätsunterschied zwischen den beiden länglichen Teilen in Form eines Bands (4 und 4') ausreichend ist, damit, in Abwesenheit von Druck, der längliche Teil (4) mit geringerer Biegsamkeit/Flexibilität eine im Wesentlichen ebene Struktur aufweist und der längliche Teil (4') mit größerer Biegsamkeit/Flexibilität eine gewölbte Struktur aufweist.

6. Adsorbierendes Element nach einem der Ansprüche 1 bis 5, **dadurch gekennzeichnet, dass** das Füllmaterial (3) von Vliesfasern aus einem Polymermaterial gebildet wird.

7. Adsorbierendes Element nach einem der Ansprüche 1 bis 6, **dadurch gekennzeichnet, dass** das Füllmaterial (3) aus Stücken, Streifen, Bändchen oder ähnlichen Abschnitten von geringer Größe aus Flor oder Faservlies aus Vliespolymermaterial bebildet wird, zum Beispiel in Form von zerrissenen und/oder zerkleinerten Fertigungsresten oder -abfällen aus der Fertigung.

8. Absorbierendes Element nach einem der Ansprüche 6 und 7, **dadurch gekennzeichnet, dass** die Fasern des Füllmaterials (3) aus einem Material bestehen oder damit bedeckt sind, das hydrophob ist, und in der Lage ist, die Kohlenwasserstoffe zurückzuhalten, zum Beispiel Polypropylen, das eine selektive Absorption oder eine Filterung ermöglicht.

9. Adsorbierendes Element nach einem der Ansprüche 1 bis 8, **dadurch gekennzeichnet, dass** mindestens der oder die länglichen Teil(e) (4) mit der geringeren Flexibilität/Biegsamkeit auf seiner (ihrer) äußeren Seite eine Beschichtung aufweist (aufweisen), die Adhäsionseigenschaften mittels Druck aufweist.

10. Adsorbierendes Element nach einem der Ansprüche 1 bis 9, **dadurch gekennzeichnet, dass** es in Höhe seines oder mindestens eines verlängerten Teils (4) mit geringerer Flexibilität/Biegsamkeit versehen ist.
